# FASCICULE DE BREVET EUROPEEN

(11) **EP 3 299 198 B1**
(45) Date de publication et mention de la délivrance du brevet: **26.06.2019**
(21) Numéro de dépôt: 17306153.2
(22) Date de dépôt: 06.09.2017
(51) Int. Cl.: B60H 1/34

(54) **DISPOSITIF DE VOLET D'OBTURATION POUR CONDUIT D'AÉRATION**
VERSCHLUSSKLAPPENVORRICHTUNG FÜR BELÜFTUNGSLEITUNG
SHUTTER DEVICE FOR CLOSING A VENTILATION DUCT

(30) Priorité: 23.09.2016 FR 1658984
(43) Date de publication de la demande: 28.03.2018
(73) Titulaire: SMRC Automotive Holdings Netherlands B.V., 8e Verdieping 1077ZX Amsterdam (NL)
(72) Inventeur: BOURDON, Jean-François, 59124 ESCAUDAIN (FR); MERCATO D'ALADERN, Gerland, 62150 BEUGIN (FR)
(74) Mandataire: Nuss, Laurent

(56) Documents cités:
- JP-A- S60 161 216
- JP-A- 2005 022 444
- US-A1- 2004 219 874

## Description

La présente invention concerne le domaine des équipements intérieurs de véhicules automobiles, plus particulièrement les moyens de réglage des flux d'air injectés dans l'habitacle, et a pour objet un dispositif de volet d'obtention pour conduit de circulation de fluide gazeux et un aérateur comportant un tel dispositif.

De nombreuses constructions d'aérateurs ou bouches d'aération commandables sont connues dans l'état de la technique.

Un tel aérateur est généralement intégré dans une pièce de garniture intérieure d'un véhicule (tableau de bord, intérieur de portière, siège, ...) et comprend une portion de conduit, un ou plusieurs types d'ailettes, un organe de régulation du flux et un organe de commande pour régler le débit et/ou l'orientation du flux d'air expulsé par l'aérateur.

Généralement, des ailettes d'orientation du flux sont disposées au niveau de l'ouverture de sortie et au moins un volet d'obturation du passage du conduit est situé à l'arrière de ces ailettes, dans le conduit de l'aérateur.

Pour des raisons de simplicité constructive et de facilité de commande, la mise en oeuvre d'un unique volet d'obturation est préférée.

Une construction classique consiste à prévoir un volet obturateur rotatif monté sur un axe de pivotement arrangé de manière centrée ou médiane dans le passage du conduit. Ce volet peut être entrainé de différentes manières : par biellette (JP-A-2013 226 876 ; JP-A-2012 254 662) ; par courroie (JP-A-2010 052 649) ; par un système pignon-crémaillère (US 3602127).

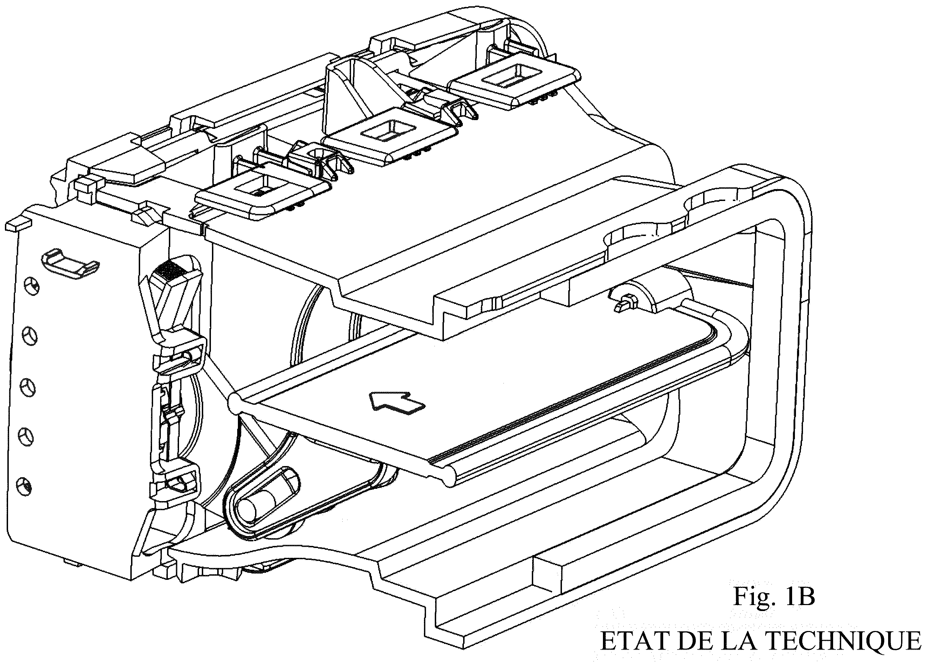

Une telle réalisation fait état de l'inconvénient majeur de la présence d'un élément perturbateur du flux, et donc obligatoirement générateur de bruits (sifflements) et de pertes de charge, en position d'ouverture maximale de l'aérateur (cf. figure 1B).

De plus, l'arrangement médian du volet nécessite de prévoir un dégagement suffisant pour permettre la rotation du volet entre sa position de fermeture et sa position d'ouverture maximale. Cette nécessité pose problème lorsque l'encombrement disponible est limité dans la direction du flux, ce qui peut être le cas pour des aérateurs en fonction de leur emplacement de montage.

Pour surmonter ce problème, la largeur des ailettes d'orientation sont réduites ou alors des découpes y sont réalisées : ces deux mesures sont nuisibles pour une bonne directivité du flux.

On a déjà proposé dans l'état de la technique, pour surmonter les limitations précitées, d'autres constructions de volets d'obturation.

Ainsi, dans les documents WO 2012/077539 et JP-A-2009/102921, le volet rigide est escamoté latéralement par translation, au moyen d'un système pignon-crémaillère.

Dans le document JP-A-2002/179784, le volet souple est constitué par un assemblage de lamelles (à la manière d'un volet roulant) et entrainé en déplacement par un système à engrènement pour être escamoté latéralement.

Toutefois, ces constructions sont complexes et encombrantes, nécessite un dégagement latéral important et sont inadaptées pour un montage dans un conduit d'aérateur.

Par ailleurs, il a également été proposé, par exemple dans le document JP-A- 2016/217435, d'articuler le volet autour d'un axe situé au niveau d'une extrémité dudit volet, autorisant un rabattement latéral en position d'ouverture.

Néanmoins, dans cette dernière construction, il faut à nouveau disposer d'un espace dégagé suffisant dans la direction longitudinale du conduit recevant ce volet.

En outre, sa manoeuvre nécessite un couple élevé compte tenu de la position en extrémité de l'axe, en particulier pour contrer les forces de poussées générées par le flux d'air circulant sur le volet.

Le but général de la présente invention consiste à surmonter au moins les principaux inconvénients des réalisations de l'état de la technique présentées ci-dessus.

Par le document JP-A-2005/022444, on connaît déjà un dispositif de volet d'obturation pour conduit de circulation de fluide gazeux, en particulier volet d'obturation pour conduit d'aérateur comprenant, d'une part, un volet qui est monté dans le conduit, et mobile entre une position d'obturation du passage du conduit et une position de dégagement maximale dudit passage, préférentiellement de forme sensiblement carrée ou rectangulaire, d'autre part, au moins un organe de manoeuvre commandable par un utilisateur et, enfin, un mécanisme de transmission de mouvement, reliant cinématiquement ledit organe audit volet, ce dernier étant monté dans le conduit avec définition d'un axe de pivotement pour ledit volet.

En outre, dans ce dispositif connu, le volet est monté dans le conduit avec faculté de déplacement guidé en translation, en plus de sa faculté de pivotement autour de l'axe, ce entre une position médiane dans le passage du conduit et une position décalée latéralement.

Dans ledit document JP-A-2005/022444, le mécanisme de transmission consiste en un système complexe bielle-manivelle, à double articulation, comprenant un effecteur sous forme de bouton rotatif, une tige formant bielle et une pièce formant manivelle, solidaire de l'axe du volet et guidé en coulissement entre deux plaques sur une partie du mouvement de translation de l'axe du volet.

Le passage de la position d'ouverture maximale (volet escamoté latéralement et parallèle à la paroi du conduit) à la position d'obturation totale (volet positionné de manière centrée par rapport au conduit et orienté pour bloquer le passage du conduit) est obtenu par deux mouvements consécutifs du volet sous l'action du bouton rotatif de commande, à savoir : tout d'abord, une translation de l'axe du volet entre une position de départ décalée latéralement dans le conduit et une position d'arrivée centrée par rapport au conduit (l'axe étant bloqué en rotation durant ce mouvement de translation), puis une rotation du volet autour de son axe (lequel est alors bloqué en coulissement en position extrême de translation).

L'enchaînement de mouvements est inversé pour le passage de l'obturation totale à l'ouverture maximale.

Toutefois, cette réalisation connue présente un certain nombre d'inconvénients, en particulier, d'une part, un risque de blocage durant le mouvement de translation du fait des frictions liées au guidage serré de la manivelle et de l'inclinaison importante entre la direction de translation et la direction d'application de la force de déplacement et, d'autre part, la nécessité de devoir prévoir un moyen d'aide au mouvement au début du déplacement en translation, sous forme d'un moyen ressort.

De plus, la régulation du flux à travers le conduit n'est pas proportionnelle, ni progressive sur toute la plage de commande (absence substantielle de variation durant le mouvement de translation du volet), et, compte-tenu des sollicitations différentes durant les deux phases distinctes et consécutives du déplacement du volet, le confort d'utilisation est dégradé.

Enfin, dans sa position décalée, le volet constitue encore un obstacle non négligeable à l'écoulement, perturbant le flux dans le conduit. Un autre exemple est divulgué par le document JP60161216.

La présente invention a pour but plus spécifique de pallier les principales limitations précitées, en améliorant, justement en termes de fiabilité et de confort d'utilisation, la réalisation connue décrite ci-dessus, et en diminuant avantageusement également la complexité constructive.

A cet effet, l'invention a pour objet un dispositif selon la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A et 1B sont des vues partielles en coupe et en élévation latérale d'un dispositif de volet d'obturation pivotant selon l'état de la technique, respectivement en position de fermeture totale (figure 1A) et en position d'ouverture maximale (figure 1B) ;
la figure 2 est une vue similaire à la figure 1A, illustrant un dispositif de volet d'obturation selon un premier mode de réalisation de l'invention en position de fermeture totale ;
les figures 3A et 3B sont des vues en coupe et en élévation du dispositif représenté figure 2, en position de fermeture totale (figure 3A) et en position d'ouverture maximale (figure 3B) ;
la figure 4 est une vue en perspective selon une autre direction de l'objet représenté figures 2A et 3A ;
les figures 5A, 5B, et 5C sont des vues en perspective selon trois directions différentes de l'objet représenté figure 3B ;
les figures 6A et 6B sont des vues partielles en coupe et en perspective d'un dispositif de volet selon un second mode de réalisation de l'invention, le volet étant en position de fermeture totale ;
la figure 7 est une vue partiellement par transparence et en perspective selon une autre direction de l'objet représenté figures 6A et 6B ;
la figure 8 est une vue similaire à celle de la figure 7, le volet étant en position d'ouverture maximale ;
les figures 9A et 9B sont des vues en perspective selon deux directions différentes de l'ensemble structurel et fonctionnel [volet / mécanisme d'asservissement / mécanisme de transmission / bouton de manoeuvre] faisant partie du dispositif de volet représenté figures 6 à 8 ;
la figure 10 est une vue éclatée du volet et de son bras d'actionnement faisant partie de l'ensemble représenté figures 9A et 9B, selon une variante de réalisation de l'invention ;
la figure 11 est une vue schématique simplifiée en élévation latérale selon la direction de l'axe de pivotement et de montage du volet du dispositif représenté figures 2 à 10, illustrant simultanément les deux positions opposées extrémales (fermeture totale et ouverture maximale) du volet d'obturation, et,
la figure 12 est une représentation similaire à celle de la figure 11 d'une variante de réalisation de l'invention, dans laquelle le volet peut être déplacé dans une position d'ouverture maximale correspondant à un escamotage total contre la paroi du conduit.

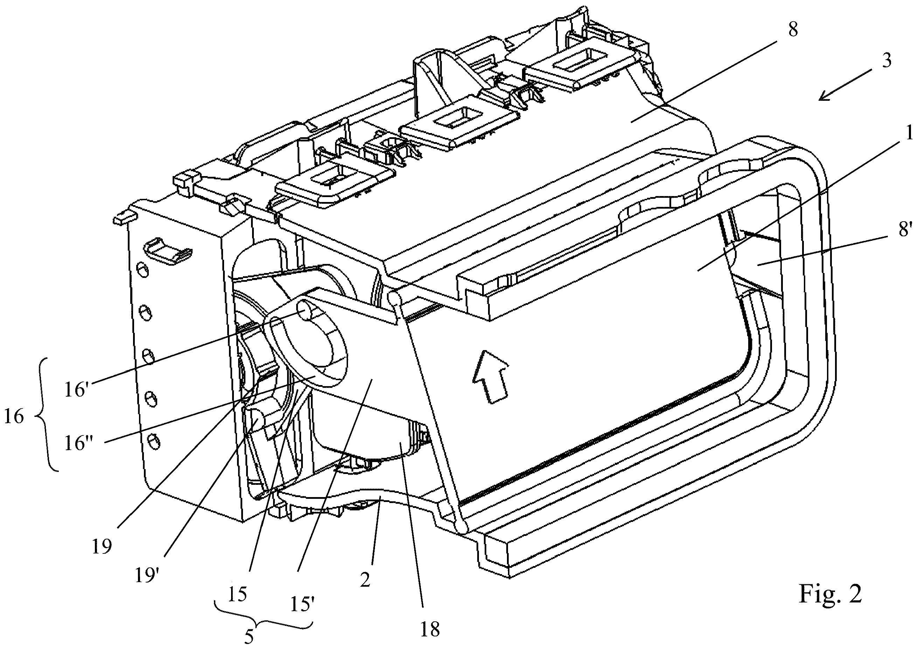

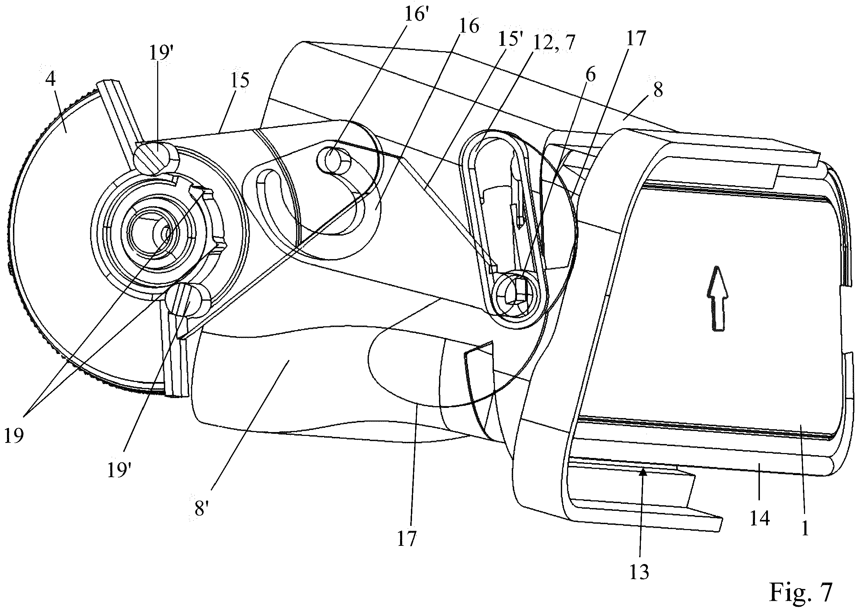

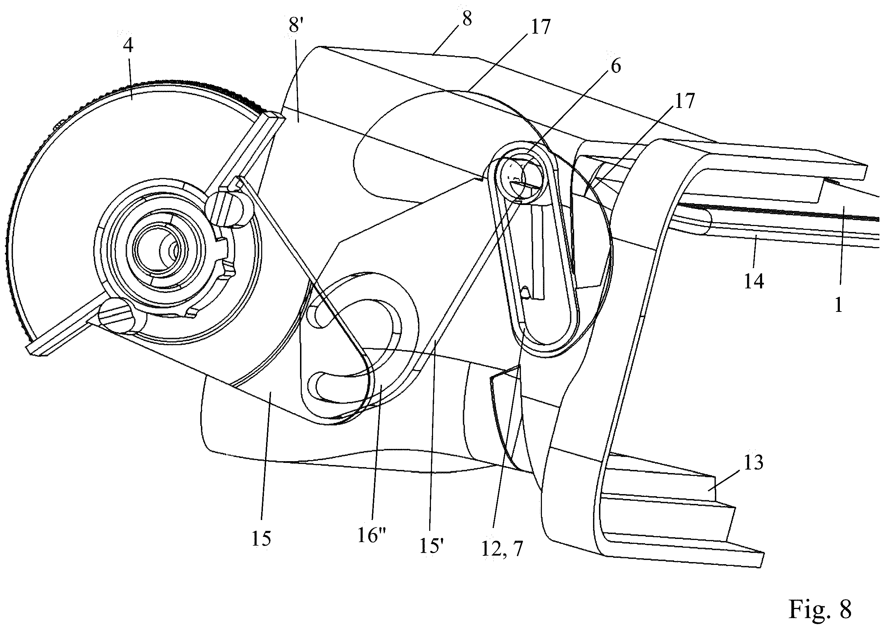

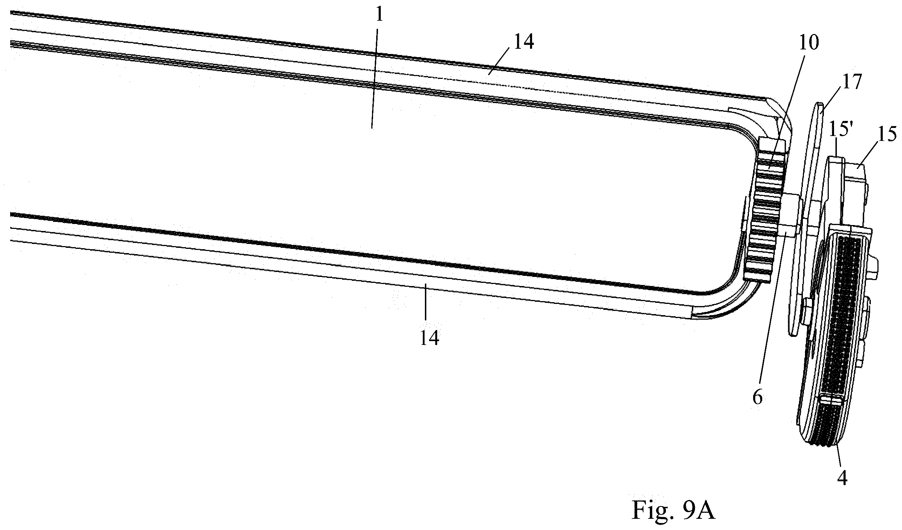

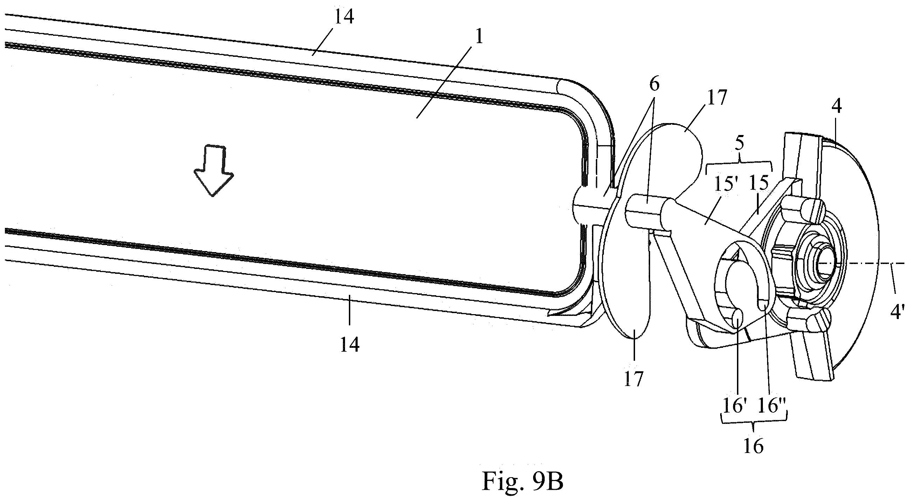

Les figures 2 à 12 montrent, au moins partiellement pour certaines, un dispositif de volet d'obturation pour conduit de circulation de fluide gazeux, en particulier volet d'obturation 1 pour conduit 2 d'aérateur 3.

Ce dispositif de volet comprend, d'une part, un volet 1 qui est monté dans le conduit 2, et mobile entre une position d'obturation du passage 2' du conduit 2 et une position de dégagement maximal dudit passage 2', préférentiellement de forme sensiblement carrée ou rectangulaire, d'autre part, au moins un organe de manoeuvre 4 commandable par un utilisateur et, enfin, un mécanisme 5 de transmission de mouvement (éventuellement avec transformation de ce dernier), reliant cinématiquement ledit organe 4 audit volet 1.

Le volet 1 est monté dans le conduit 2 avec définition d'un axe de pivotement 6 médian pour ledit volet 1 et avec faculté de déplacement guidé en translation, en plus de sa faculté de pivotement autour de l'axe 6, ce entre une position médiane dans le passage 2' du conduit 2 et une position décalée latéralement.

Conformément à l'invention, les mouvements simultanés de rotation et de translation sont mutuellement assujettis ou rendus interdépendants par l'intermédiaire d'un mécanisme d'asservissement 9 et le volet 1 est, dans sa position de dégagement maximal sensiblement plaqué contre l'une des parois 8, 8' dudit conduit 2.

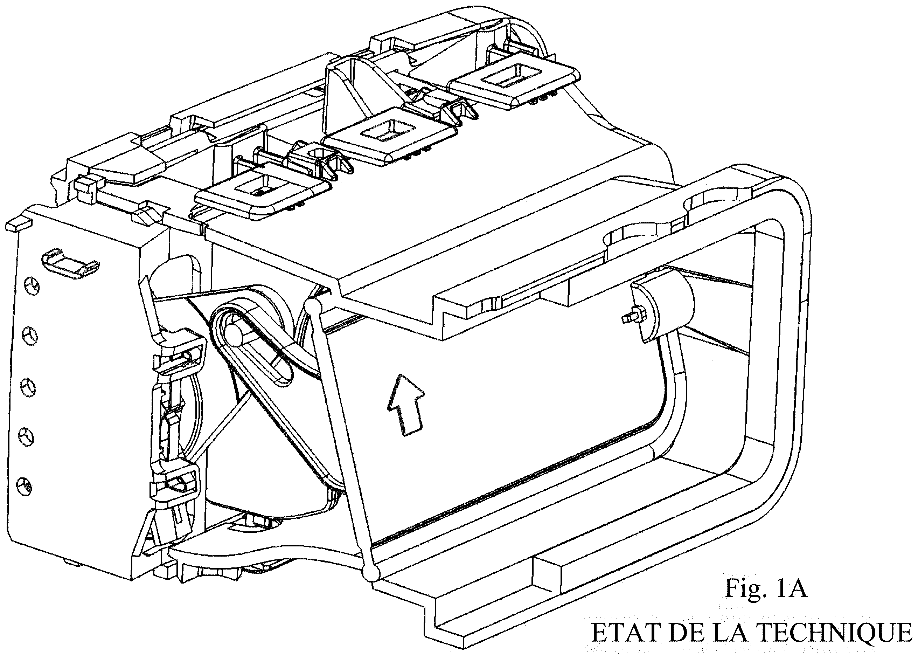

Ainsi, sans complexifier notablement la structure du dispositif connu des figures 1A et 1B et sans générer d'encombrement supplémentaire par rapport à cette réalisation antérieure connue (cf. comparaison des figures 1A et 2), l'amélioration constructive de l'invention permet de libérer le passage 2' de tout obstacle, en particulier au niveau de sa région médiane, en position d'ouverture maximale.

En outre, en combinant au niveau du volet 1 les mouvements de rotation et de translation en un déplacement complexe liant entre elles de manière concomitante et interdépendante ces deux composantes cinématiques, ce sur toute la plage de commande fournie par l'organe 4, on aboutit à une manoeuvre plus fluide pour l'utilisateur et, surtout, avec un résultat progressif par rapport à l'actionnement effectué par ce dernier.

Selon une caractéristique constructive de l'invention, et en relation avec un organe 4 rotatif, l'axe de pivotement 6 est relié à deux parois opposées 8' du conduit 2 (avantageusement de section sensiblement carrée ou rectangulaire) de manière à assurer un montage avec guidage en translation et faculté de rotation du volet 1 par rapport audit conduit 2, l'organe de manoeuvre 4 étant configuré pour impartir un mouvement de rotation au volet 1 par le biais du mécanisme 5 de transmission, ce mouvement de rotation étant également converti simultanément en un mouvement de translation par l'intermédiaire du mécanisme d'asservissement 9, en coopération avec le montage avec guidage en translation de l'axe 6.

Afin de pouvoir fournir une relation précise et sans jeu entre les deux types de mouvements, il est avantageusement prévu que le mécanisme d'asservissement 9 comprenne au moins une liaison par engrènement entre un élément denté 10 solidaire du volet 1 ou de son axe de pivotement 6 et un élément denté 11 solidaire du conduit 2.

Plus précisément, et en accord avec une variante de réalisation pratique avantageuse, l'axe de pivotement et de montage 6 est relié au conduit 2, d'une part, par une liaison glissière 7 apte et destinée à réaliser un guidage en translation dudit axe 6 entre une position médiane dans le passage 2' du conduit 2 et une position décalée latéralement vers une paroi 8, 8' dudit conduit 2 et, d'autre part, par au moins une liaison 9 par engrènement, par exemple du type pignon 10 - crémaillère 11, apte et destinée à réaliser une rotation dudit axe 6 avec déplacement simultané de ce dernier en translation. Ces deux liaisons 7 et 9 sont configurées et arrangées mutuellement pour coopérer opérationnellement entre elles de manière à imposer audit volet 1, sous l'action du mécanisme de transmission 5 lors de l'actionnement de l'organe de manoeuvre 4 un mouvement de déplacement combinant, de manière simultanée et interdépendante, un pivotement contrôlé autour de son axe 6 et un déplacement contrôlé en translation de ce dernier, ce entre des positions extrêmes d'obturation et de dégagement du passage 2' du conduit 2.

Comme cela ressort des dessins annexés, le mécanisme à crémaillère 9 synchronise entre eux et asservit mutuellement, d'une part, le mouvement de rotation du volet 1 autour de son axe 6 et, d'autre part, le mouvement de translation dudit axe 6 dans les glissières ou rainures de guidage 12 latérales de la liaison glissière 7 entre le volet 1 et le conduit 2.

L'asservissement des deux mouvements est avantageusement paramétré constructivement de telle manière qu'un positionnement médian de l'axe de pivotement 6 corresponde obligatoirement à une position en rotation du volet 1 selon sur un plan sensiblement perpendiculaire à la direction d'écoulement D ou à l'axe longitudinal AL du conduit 2 (position de fermeture totale du passage 2'). D'autre part, un positionnement décalé latéralement (vers une des parois 8, 8' du conduit 2) de l'axe de pivotement correspond obligatoirement à une position en rotation du volet 1 offrant une résistance minimale à l'écoulement, préférentiellement avec un positionnement selon un plan parallèle à la direction d'écoulement D ou à l'axe longitudinal AL du conduit 2 (position d'ouverture maximale du volet 1).

Préférentiellement, et comme le montrent les figures 2 à 11, le volet 1 effectue une rotation avec une amplitude proche de 90°, et d'au moins 80°, lorsque l'axe de pivotement 6 est déplacé en translation entre ses deux positions extrêmes (médiane et décalée latéralement).

L'axe de pivotement et de montage 6 peut, par exemple, consister en un corps traversant, par exemple métallique, sur lequel est surmoulé le volet 1 et qui dépasse, sous la forme de deux portions d'axe saillantes, de part et d'autre du corps dudit volet 1.

L'axe de pivotement et de montage 6 peut également consister uniquement en deux portions d'axe alignées et proéminentes latéralement du corps du volet 1 avec lequel elles sont formées.

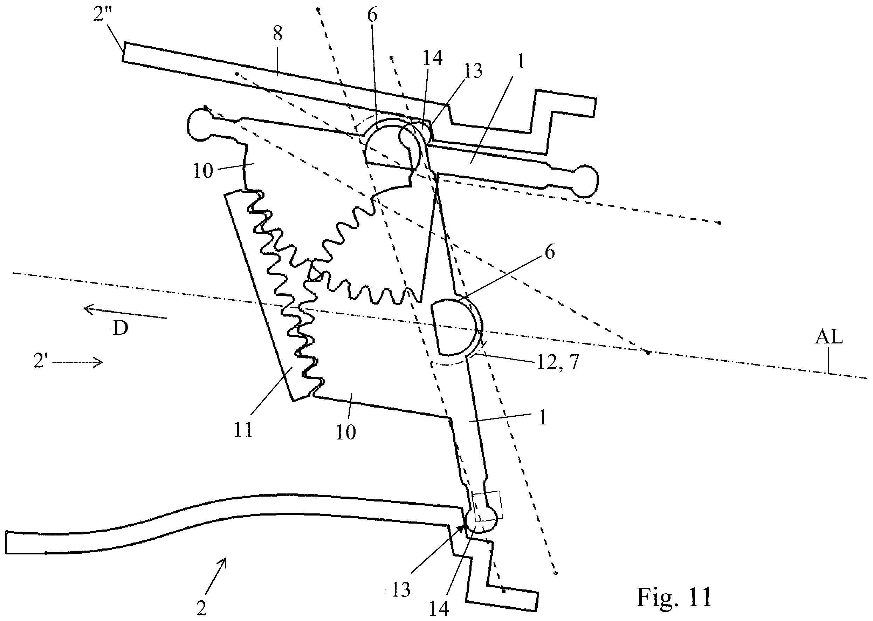

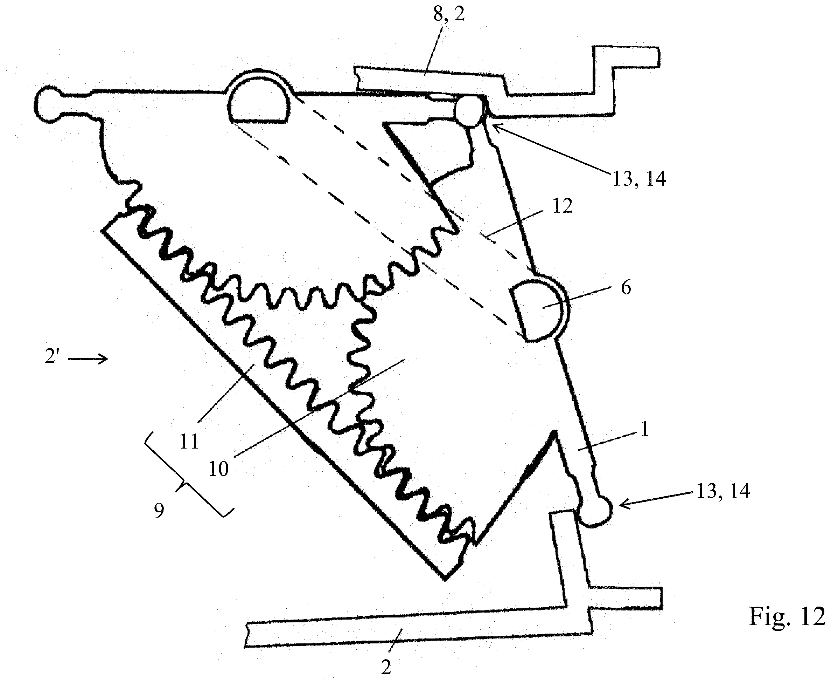

Quel que soit son mode de réalisation, ledit axe 6 est avantageusement monté latéralement avec faculté de glissement dans des rainures ou fentes rectilignes 12 parallèles, qui sont ménagées dans des parois opposées 8' du conduit 2, qui s'étendent sensiblement du milieu desdites parois 8' jusqu'à leurs bords supérieurs ou inférieurs et qui définissent ensemble la liaison glissière 7. De plus, au moins un mécanisme 9 réalisant la liaison par engrènement est associé audit volet 1 ou audit axe 6, ce mécanisme 9 comprenant un pignon ou une portion de roue dentée 10 solidaire du volet 1 ou de l'axe 6 et une crémaillère 11 solidaire du conduit 2 ou formée sur ce dernier. La liaison glissière 7 [axe 6 / rainures 12] et la ou chaque liaison par engrènement 9 [crémaillère 11 / portion de roue dentée 10] sont configurées et arrangées mutuellement pour coopérer opérationnellement entre elles de manière à déplacer le volet 1 selon un mouvement complexe combinant pivotement autour de son axe 6 et déplacement simultané et proportionnel en translation dudit axe 6, ce progressivement entre une position d'obturation du passage, dans laquelle le volet 1 est positionné selon un plan sensiblement perpendiculaire à l'axe longitudinal AL du conduit 2 et avec son axe 6 en position médiane, et une position d'ouverture maximale dudit passage 2', dans laquelle le volet 1 est déporté contre la paroi supérieure 8 ou inférieure dudit conduit 2 en étant avantageusement positionné parallèlement à cette paroi 8, préférentiellement sensiblement plaqué contre cette dernière (figure 12) ou contre un décrochement interne de celle-ci (figure 11).

En accord avec une construction pratique préférée du dispositif selon l'invention, ressortant notamment des figures 2, 3, 6A et 11 des dessins annexés, les orientations des glissières 12 et de la ou des crémaillère(s) 11 sont mutuellement parallèles ou sensiblement parallèles, le pignon ou la portion de roue dentée 10 de la ou chaque liaison 9 par engrènement consiste en un secteur angulaire denté d'environ 90° formé sur le volet 1 ou sur l'axe 6, et le dégagement du volet 1 s'effectue en direction de la paroi supérieure 8 du conduit 2, les rainures ou fentes 12 des liaisons à glissière 7 et la ou les crémaillère(s) 11 étant inclinées suivant la direction d'écoulement (D) du flux gazeux circulant dans le conduit 2, de leurs extrémités inférieures vers leurs extrémités supérieures.

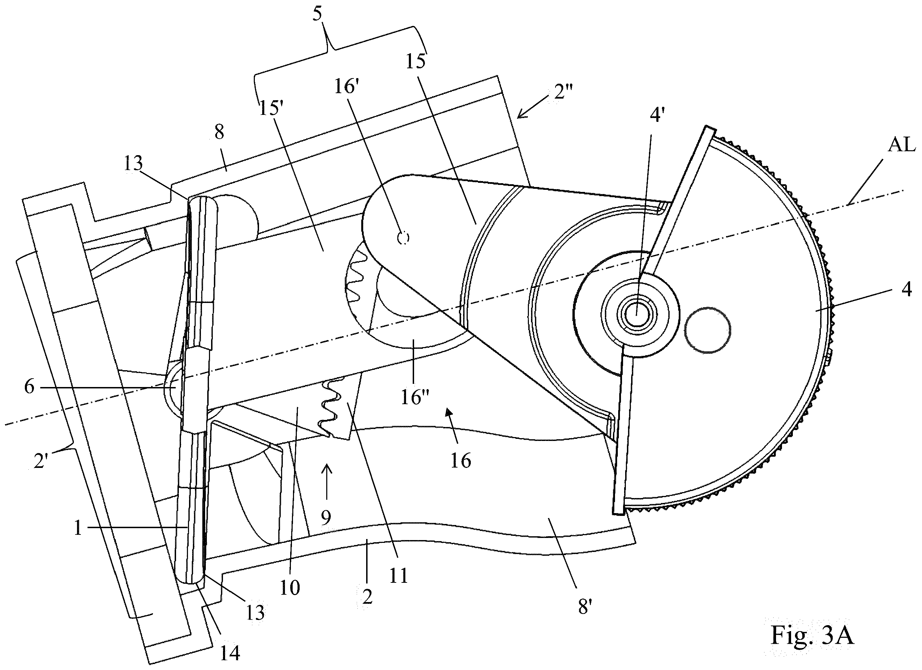

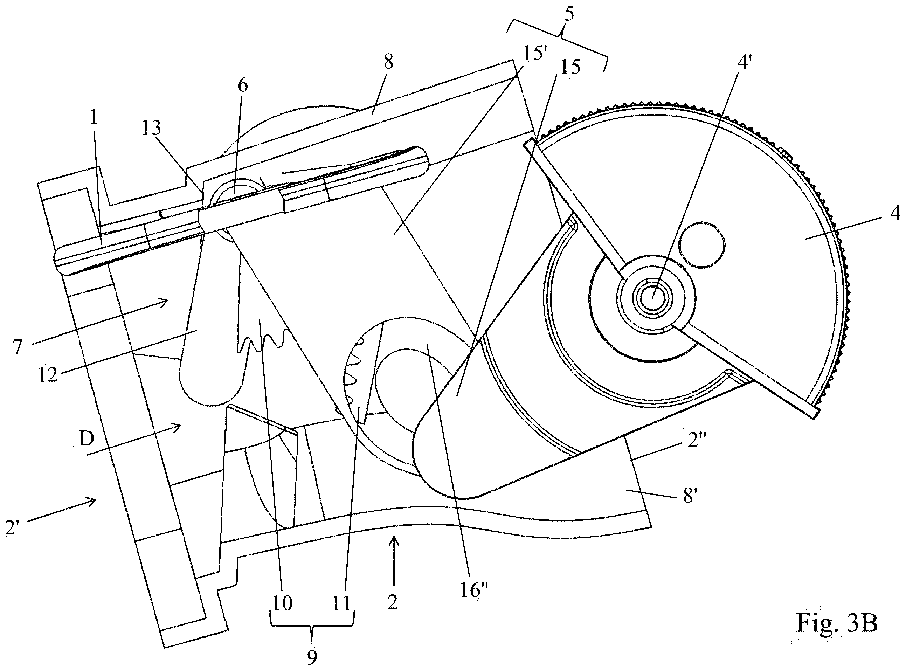

En position d'ouverture maximale, le volet 1 est amené selon l'invention au plus près de la paroi 8 correspondante du conduit 2, avec préférentiellement un positionnement parallèle à la surface intérieure de cette paroi. Lorsque ladite paroi 8 comporte des parties saillantes vers l'intérieur du passage 2' du conduit 2, ces parties saillantes définissent l'escamotage maximal possible, comme l'illustrent par exemple la figure 11 en relation avec les figures 3B, 5A, 5B et 8.

Il peut également être envisagé, en relation avec une variante de réalisation de l'invention illustrée schématiquement sur la figure 12, de déporter le volet 1 en position d'ouverture maximale en dehors des zones du conduit 2 comportant des proéminences internes, pour un plaquage surfacique contre la paroi 8 correspondante.

A cet effet, les glissières 12 ainsi que les composantes 10 et 11 de la liaison par engrènement 9 sont adaptées en termes de taille, de forme et d'orientation pour amener l'axe 6 et donc le volet 1 dans la position extrêmale adéquate (cf. figure 12).

L'homme du métier comprend que lorsque le guidage en translation de l'axe de pivotement 6 s'effectue parallèlement à la barre rectiligne dentée formant la crémaillère 11 (glissières 12 situées dans un plan parallèle à cette dernière), le secteur angulaire denté 10 présente une forme circulaire (cf. figure 11).

Toutefois, lorsque la position escamotée finale à atteindre pour l'axe de pivotement 6 impose une trajectoire en translation qui n'est pas parallèle à la crémaillère 11, le secteur denté 10 peut présenter une forme de pourtour extérieur non circulaire et/ou décentrée par rapport à l'axe 6 de manière à assurer un engrènement effectif au niveau de la liaison 9 sur toute l'étendue de déplacement de l'axe 6 (cf. figure 12).

En particulier lorsque la liaison d'engrènement 9 est déportée de manière importante latéralement par rapport au plan médian ou au centre du volet 1 et du passage 2' du conduit 2 comme par exemple dans les modes de réalisation illustrés et que ledit volet 1 et ledit passage 2' présente une largeur importante, il peut être avantageusement prévu de dédoubler cette liaison d'engrènement 9, en prévoyant une seconde liaison de ce type (non représentée) du côté opposé du conduit 2, pour assurer une meilleure stabilité et un meilleur guidage du volet 1.

En vue de pouvoir garantir une position de fermeture totale reproductible et stable, avec réalisation d'une bonne étanchéité, le conduit 2 comporte des épaulements ou décrochements internes 13 au niveau de ses parois 8, 8', qui forment surfaces d'appui pour le volet 1 en position d'obturation, ce dernier étant avantageusement pourvu d'un joint périphérique 14 venant en appui contre ces surfaces.

Avantageusement, le mécanisme 5 de transmission et de transformation du mouvement comprend un premier bras 15 solidaire rigidement de l'organe de manoeuvre 4 sous forme de bouton rotatif, monté pivotant par rapport au conduit 2, et un second bras 15' solidaire rigidement du volet 1 ou de l'axe de pivotement et de montage 6 dudit volet 1, ces deux bras 15 et 15' étant reliés entre eux par une liaison articulée 16 autorisant une transmission de mouvement entre le premier bras 15 et le second bras 15', ledit mouvement étant transformé par les liaisons à glissière 7 et à engrènement 9 reliant le volet 1 ou son axe 6 au conduit 2 en un déplacement complexe combinant rotation et translation dudit volet 1 et de son axe 6.

Ainsi, une seule liaison articulée est mise en oeuvre pour transmettre le mouvement de l'organe de manoeuvre 4 au volet 1.

Préférentiellement, cette liaison articulée 16 entre les premier et second bras 15 et 15' est constituée par un ergot ou un doigt 16' circulant dans une rainure ou une gorge 16" et comprend un ergot 16' formé au niveau de l'extrémité libre du premier bras 15 et une rainure circulaire partielle 16" ménagée dans l'extrémité libre du second bras 15'.

Conformément à un premier mode de réalisation de l'invention, illustré aux figures 2 à 5, le mécanisme 5 et l'organe de manoeuvre 4 sont disposés à l'intérieur de l'ouverture de sortie 2" du conduit 2, le mécanisme 5 de transmission de mouvement s'étendant dans ledit conduit 2 et étant relié cinématiquement au volet 1, préférentiellement à la partie de ce dernier située au-dessus de son axe de pivotement et de montage 6.

Ainsi, les deux bras 15 et 15' du mécanisme 5 et éventuellement une partie de l'organe 4 sont logés dans le conduit 2, donc invisibles de l'extérieur de l'aérateur 3.

Une partie complémentaire au moins de l'organe 4, à savoir celle destinée à être manipulée par l'utilisateur, doit être accessible de l'extérieur et donc être proéminente par rapport à l'ouverture de sortie 2" du conduit 2. Cette partie est par conséquent située au-delà du bord de l'ouverture 2", et des ailettes d'orientation 18 normalement présentes et, le cas échéant, d'une éventuelle grille extérieure fermant ladite ouverture 2".

L'axe de pivotement 4' dans le cas d'un organe 4 rotatif peut être relié aux ailettes 18 précitées, ou être monté sur une traverse ou un palier spécifique disposé(e) dans l'ouverture 2".

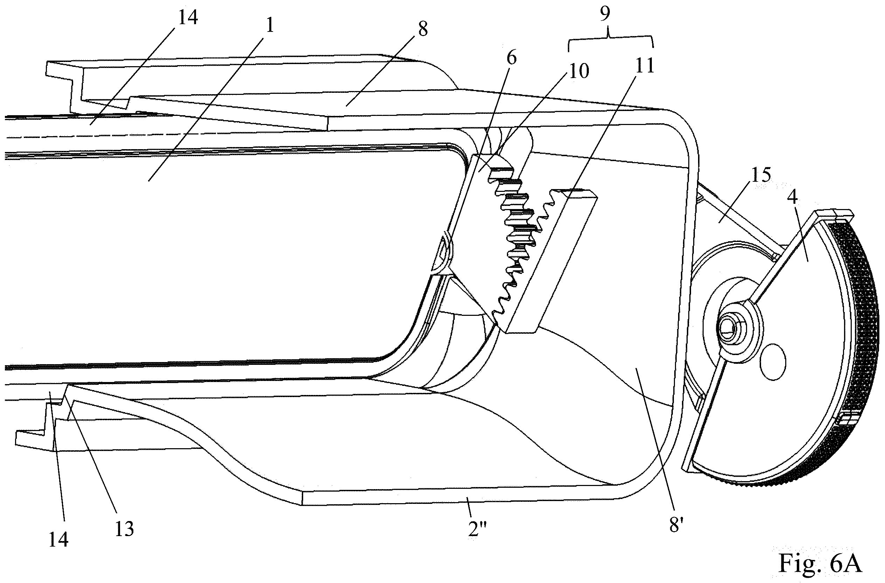

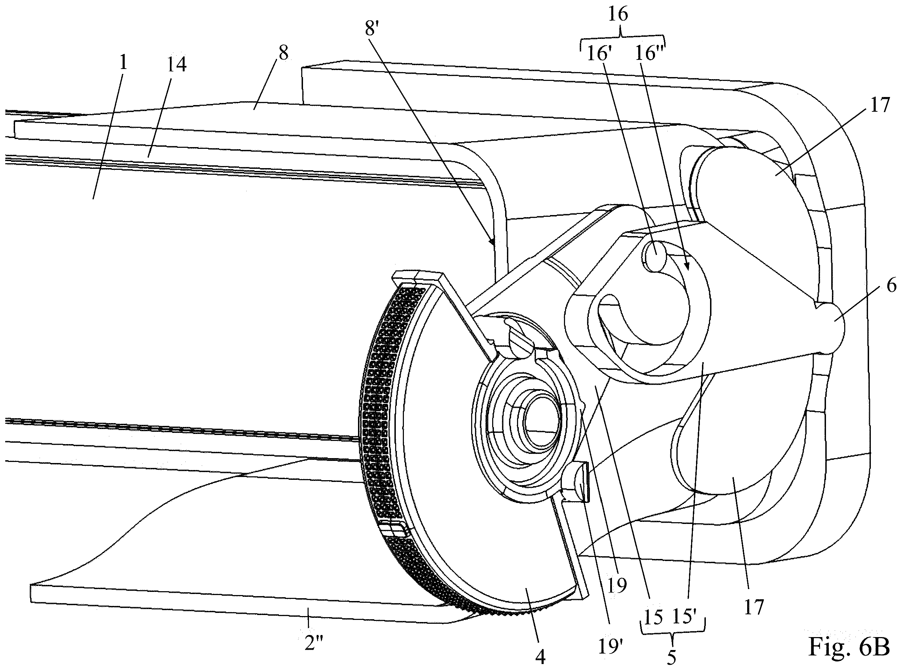

Conformément à un second mode de réalisation de l'invention, illustré sur les figures 6 à 9, l'organe de manoeuvre 4 et le mécanisme 5 de transmission de mouvement sont arrangés sur un côté latéral extérieur du conduit 2, ledit mécanisme 5 étant relié à une partie de l'axe de pivotement et de montage 6 du volet 1 qui est montée traversante dans une glissière 12 ménagée dans une paroi latérale 8' attenante du conduit 2.

Dans cette seconde construction, l'organe 4 est déporté par rapport à l'ouverture de sortie 2" et donc situé en dehors du flux d'air sortant. En outre, cette configuration permet d'utiliser le conduit 2 et l'environnement alentour de ce dernier comme support de montage pour le mécanisme 5 et l'organe 4.

Afin de limiter les fuites d'air parasites, il peut être avantageusement prévu que le second bras 15' du mécanisme 5 de transmission de mouvement comporte un flasque 17 configuré pour obturer la glissière traversante 12 ménagée dans la paroi 8' du conduit 2, ce quelle que soit la position du volet 1.

Comme le montrent les figures 6B et 7 à 9, ce flasque 17 présente avantageusement une forme en 8 ou en ailes de papillon et est solidaire de l'axe 6, et située en appui à l'extérieur de la fente ou rainure traversante 12 formant glissière, chaque partie du 8 ou aile présentant une forme adaptée et une extension suffisante pour couvrir la totalité de la surface de ladite fente 12.

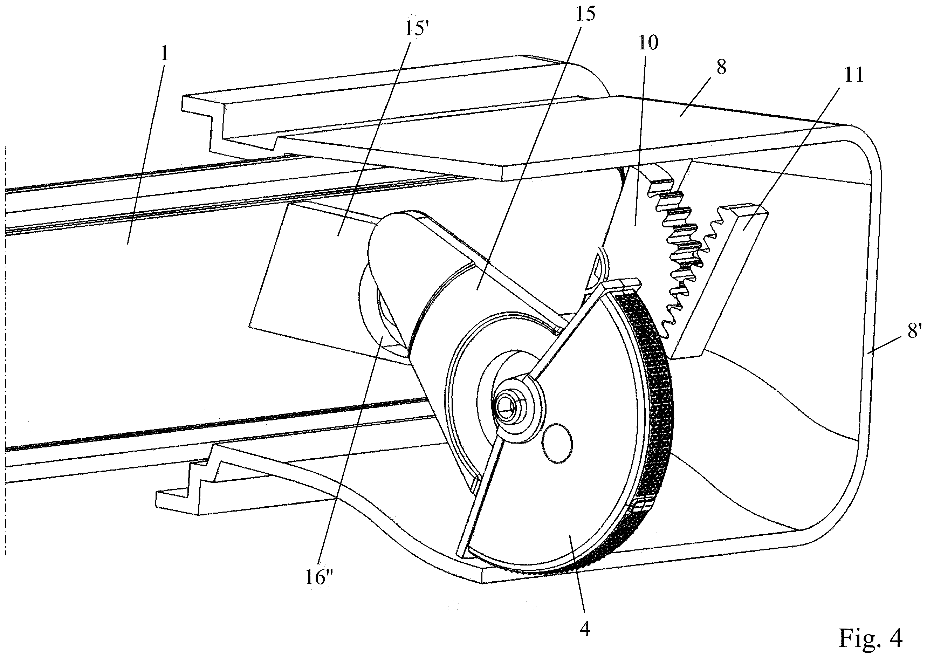

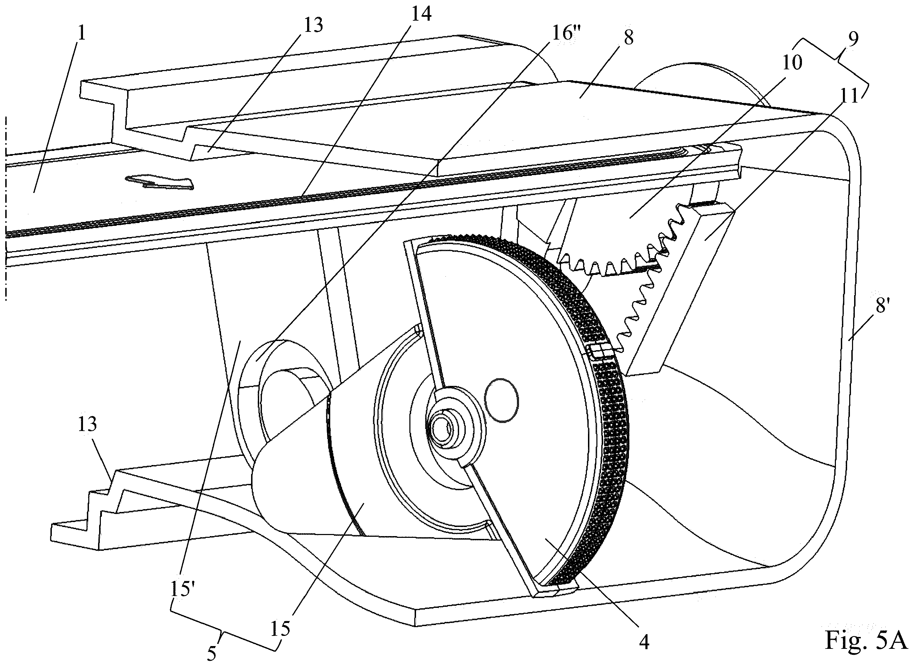

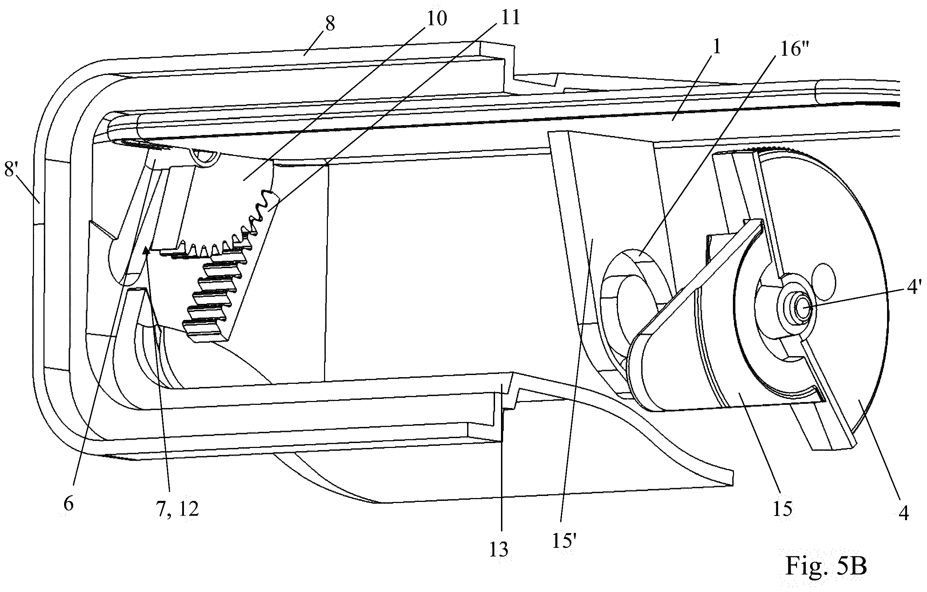

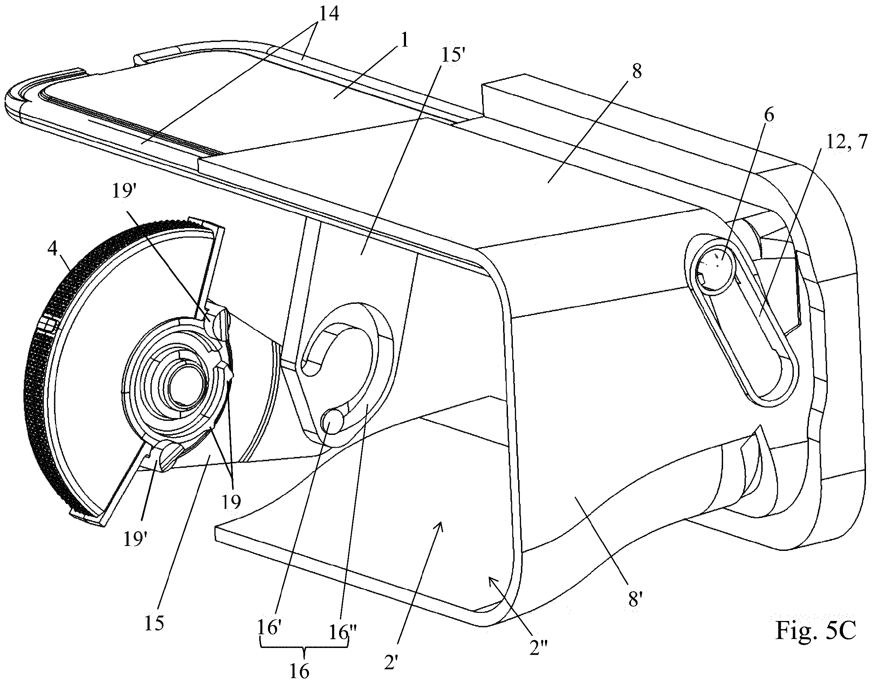

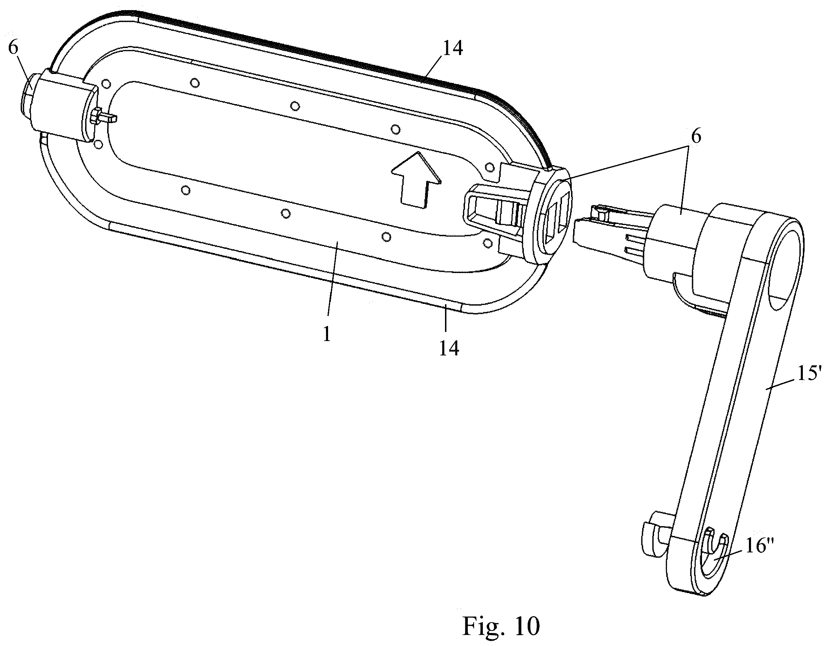

Le second bras 15' du mécanisme 5 peut être formé d'un seul tenant avec le volet 1 (figures 4 et 5) ou être assemblé rigidement avec le volet 1 par une liaison par emboîtement avec verrouillage par enclenchement élastique et/ou à crans (figure 10).

Le premier bras 15 du mécanisme 5 peut quant à lui être formé d'un seul tenant avec le corps du bouton rotatif 4 formant l'organe de manoeuvre, sous la forme d'une extension latérale de ce dernier (voir notamment figures 5 et 6).

Par ailleurs, le bouton rotatif 4 peut présenter des moyens de butée 19, tels que par exemple des mamelons, des ergots, des épaulements ou analogues venant en contact lors de la rotation dudit bouton 4 avec des moyens de contre-butée 19', arrangés sur le conduit 2 par exemple.

Ces moyens 19 et 19' coopérants définissent ainsi l'amplitude de pivotement dudit bouton 4 qui correspond à un déplacement du volet 1 entre sa position de fermeture et sa position d'ouverture.

La présente invention concerne également, comme illustré en partie sur les figures 2A et 2B, un aérateur de véhicule automobile comprenant essentiellement un conduit 2, un volet d'obturation 1 monté dans le conduit 2 et commandable à l'aide d'un organe de manoeuvre 4 et une pluralité d'ailettes 18 de diffusion et d'orientation du flux d'air sortant de l'aérateur 3, montées au niveau de l'ouverture de sortie 2" du conduit 2 de ce dernier.

Cet aérateur 3 est caractérisé en ce que le volet 1 et l'organe de manoeuvre 4 font partie d'un dispositif de volet tel que décrit précédemment, le volet 1 et la section du passage 2' du conduit 2 recevant ce dernier présentant une forme générale sensiblement carrée ou rectangulaire.

Comme cela ressort partiellement des figures 3B, 5A, 5B et 5C, on peut relever que le volet 1 permet, dans sa position escamotée latéralement, d'occulter d'éventuelles zones de perturbation du flux dans le passage 2', liées à des décrochements, des rétrécissements ou d'autres inégalités internes provenant de nécessités constructives du conduit 2. Dans ses positions intermédiaires, le volet 1 participe en outre à un guidage directif dudit flux.

Enfin, l'invention porte également sur véhicule automobile caractérisé en ce qu'il comprend au moins un aérateur 3 tel que décrit précédemment.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de volet d'obturation pour conduit de circulation de fluide gazeux, en particulier volet d'obturation pour conduit d'aérateur,
ce dispositif de volet comprenant, d'une part, un volet (1) qui est monté dans le conduit (2), et mobile entre une position d'obturation du passage (2') du conduit (2) et une position de dégagement maximal dudit passage (2'), préférentiellement de forme sensiblement carrée ou rectangulaire, d'autre part, au moins un organe de manoeuvre (4) commandable par un utilisateur et, enfin, un mécanisme (5) de transmission, éventuellement avec transformation, de mouvement, reliant cinématiquement ledit organe (4) audit volet (1), ce dernier étant monté dans le conduit (2) avec définition d'un axe de pivotement (6) médian pour ledit volet (1),
dispositif de volet dans lequel le volet (1) est monté dans le conduit (2) avec faculté de déplacement guidé en translation, en plus de sa faculté de pivotement autour de l'axe (6), ce entre une position médiane dans le passage (2') du conduit (2) et une position décalée latéralement, dispositif de volet dans lequel les mouvements simultanés de rotation et de translation sont mutuellement assujettis ou rendus interdépendants par l'intermédiaire d'un mécanisme d'asservissement (9) et le volet (1) est, dans sa position de dégagement maximal, sensiblement plaqué contre l'une des parois (8, 8') dudit conduit (2), et **caractérisé en ce que** l'axe de pivotement (6) est relié à deux parois opposées (8') du conduit (2) de manière à assurer un montage avec guidage en translation et faculté de rotation du volet (1) par rapport audit conduit (2), l'organe de manoeuvre (4) étant configuré pour impartir un mouvement de rotation au volet (1) par le biais du mécanisme (5) de transmission, ce mouvement de rotation étant également converti simultanément en un mouvement de translation par l'intermédiaire du mécanisme d'asservissement (9), en coopération avec le montage avec guidage en translation de l'axe (6).

2. Dispositif de volet d'obturation selon la revendication 1, **caractérisé en ce que** le mécanisme d'asservissement (9) comprend au moins une liaison par engrènement entre un élément denté (10) solidaire du volet (1) ou de son axe de pivotement (6) et un élément denté (11) solidaire du conduit (2).

3. Dispositif de ce volet d'obturation selon l'une quelconque des revendications 1 et 2, **caractérisé en ce que** l'axe de pivotement (6) du volet (5), qui assure également son montage, est relié au conduit (2), d'une part, par une liaison glissière (7) apte et destinée à réaliser un guidage en translation dudit axe (6) entre une position médiane dans le passage (2') du conduit (2) et une position décalée latéralement vers une paroi (8, 8') dudit conduit (2) et, d'autre part, par au moins une liaison (9) par engrènement, par exemple du type pignon (10) - crémaillère (11), apte et destinée à réaliser une rotation dudit axe (6) avec déplacement simultané de ce dernier en translation, ces deux liaisons (7 et 9) étant configurées et arrangées mutuellement pour coopérer opérationnellement entre elles de manière à imposer audit volet (1), sous l'action du mécanisme de transmission (5) lors de l'actionnement de l'organe de manoeuvre (4) un mouvement de déplacement combinant, de manière simultanée et interdépendante, un pivotement contrôlé autour de son axe (6) et un déplacement contrôlé en translation de ce dernier, ce entre des positions extrêmes d'obturation et de dégagement du passage (2') du conduit (2).

4. Dispositif de volet d'obturation selon l'une quelconque des revendications 1 à 3, **caractérisé en ce que** l'axe (6) de pivotement du volet (1) est monté latéralement avec faculté de glissement dans des rainures ou fentes rectilignes (12) parallèles, qui sont ménagées dans des parois opposées (8') du conduit (2), qui s'étendent sensiblement du milieu desdites parois (8') jusqu'à leurs bords supérieurs ou inférieurs et qui définissent la liaison glissière (7), et **en ce qu'**au moins un mécanisme (9) réalisant la liaison par engrènement est associé audit volet (1) ou audit axe (6), ce mécanisme (9) comprenant un pignon ou une portion de roue dentée (10) solidaire du volet (1) ou de l'axe (6) et une crémaillère (11) solidaire du conduit (2) ou formée sur ce dernier, la liaison glissière (7) entre l'axe (6) et les rainures (12) et la ou chaque liaison par engrènement (9) entre la crémaillère (11) et la portion de roue dentée (10) étant configurées et arrangées mutuellement pour coopérer opérationnellement entre elles de manière à déplacer le volet (1) selon un mouvement complexe combinant pivotement autour de son axe (6) et déplacement simultané et proportionnel en translation dudit axe (6), ce progressivement entre une position d'obturation du passage, dans laquelle le volet (1) est positionné selon un plan sensiblement perpendiculaire à l'axe longitudinal (AL) du conduit (2) et avec son axe (6) en position médiane, et une position d'ouverture maximale dudit passage (2'), dans laquelle le volet (1) est déporté contre la paroi supérieure (8) ou inférieure dudit conduit (2) en étant avantageusement positionné parallèlement à cette paroi (8), préférentiellement sensiblement plaqué contre cette dernière.

5. Dispositif de volet d'obturation selon la revendication 4, **caractérisé en ce que** les orientations des glissières (12) et de la ou des crémaillère(s) (11) sont mutuellement parallèles ou sensiblement parallèles, **en ce que** le pignon ou la portion de roue dentée (10) de la ou chaque liaison (9) par engrènement consiste en un secteur angulaire denté d'environ 90° formé sur le volet (1) ou sur l'axe (6), et **en ce que** le dégagement du volet (1) s'effectue en direction de la paroi supérieure (8) du conduit (2), les rainures ou fentes (12) des liaisons à glissière (7) et la ou les crémaillère(s) (11) étant inclinées suivant la direction d'écoulement (D) du flux gazeux circulant dans le conduit (2), de leurs extrémités inférieures vers leurs extrémités supérieures.

6. Dispositif de volet d'obturation selon l'une quelconque des revendications 1 à 5, **caractérisé en ce que** le conduit (2) comporte des épaulements ou décrochements internes (13) au niveau de ses parois (8, 8'), qui forment surfaces d'appui pour le volet (1) en position d'obturation, ce dernier étant avantageusement pourvu d'un joint périphérique (14) venant en appui contre ces surfaces.

7. Dispositif de volet d'obturation selon l'une quelconque des revendications 1 à 6, **caractérisé en ce que** le mécanisme (5) de transmission et de transformation du mouvement comprend un premier bras (15) solidaire rigidement de l'organe de manoeuvre (4) sous forme de bouton rotatif, monté pivotant par rapport au conduit (2), et un second bras (15') solidaire rigidement du volet (1) ou de l'axe de pivotement et de montage (6) dudit volet (1), ces deux bras (15 et 15') étant reliés entre eux par une liaison articulée (16) autorisant une transmission de mouvement entre le premier bras (15) et le second bras (15'), ledit mouvement étant transformé par les liaisons à glissière (7) et à engrènement (9) reliant le volet (1) ou son axe (6) au conduit (2) en un déplacement complexe combinant rotation et translation dudit volet (1) et de son axe (6).

8. Dispositif de volet d'obturation selon la revendication 7, **caractérisé en ce que** la liaison articulée (16) entre les premier et second bras (15 et 15') est constituée par un ergot ou un doigt (16') circulant dans une rainure ou une gorge (16") et comprend un ergot (16') formé au niveau de l'extrémité libre du premier bras (15) et une rainure circulaire partielle (16") ménagée dans l'extrémité libre du second bras (15').

9. Dispositif de volet d'obturation selon l'une quelconque des revendications 1 à 8, **caractérisé en ce que** le mécanisme (5) de transmission de mouvement et éventuellement une partie au moins de l'organe de manoeuvre (4) sont disposés à l'intérieur de l'ouverture de sortie (2") du conduit (2), le mécanisme (5) de transmission de mouvement s'étendant dans ledit conduit (2) et étant relié cinématiquement au volet (1), préférentiellement à la partie de ce dernier située au-dessus de son axe de pivotement et de montage (6).

10. Dispositif de volet d'obturation selon l'une quelconque des revendications 1 à 8, **caractérisé en ce que** l'organe de manoeuvre (4) et le mécanisme (5) de transmission de mouvement sont arrangés sur un côté latéral extérieur du conduit (2), ledit mécanisme (5) étant relié à une partie de l'axe de pivotement et de montage (6) du volet (1) qui est montée traversante dans une glissière (12) ménagée dans une paroi latérale (8') attenante du conduit (2).

11. Dispositif de volet d'obturation selon les revendications 8 7 et 10, **caractérisé en ce que** le second bras (15') du mécanisme (5) de transmission de mouvement comporte un flasque (17) configuré pour obturer la glissière traversante (12) ménagée dans la paroi (8') du conduit (2), ce quelle que soit la position du volet (1).

12. Aérateur de véhicule automobile comprenant essentiellement un conduit (2), un volet d'obturation (1) monté dans le conduit (2) et commandable à l'aide d'un organe de manoeuvre (4) et une pluralité d'ailettes (18) de diffusion et d'orientation du flux d'air sortant de l'aérateur (3), montées au niveau de l'ouverture de sortie (2") du conduit (2) de ce dernier,
aérateur (3) **caractérisé en ce que** le volet (1) et l'organe de manoeuvre (4) font partie d'un dispositif selon l'une quelconque des revendications 1 à 11, le volet (1) et la section du passage (2') du conduit (2) recevant ce dernier présentant une forme générale sensiblement carrée ou rectangulaire.

13. Véhicule automobile **caractérisé en ce qu'**il comprend au moins un aérateur (3) selon la revendication 12.

## Patentansprüche

1. Verschlusskappenvorrichtung für eine Zuführleitung für gasförmiges Fluid, insbesondere eine Verschlusskappe für eine Leitung eines Lüfters,
wobei die Vorrichtung einerseits eine Klappe (1) umfasst, die in der Leitung (2) montiert ist und zwischen einer verschlossenen Position des Durchlasses (2') der Leitung (2) und einer maximalen freigegebenen Position des Durchlasses (2') beweglich ist, bevorzugt in einer im Wesentlichen quadratischen oder rechteckigen Form; andererseits mindestens ein Bedienelement (4), das durch einen Bediener gesteuert werden kann, und schließlich einen Mechanismus (5) zum Übertragen, gegebenenfalls mit Umwandlung, einer Bewegung, die kinematisch das Element (4) mit der Klappe(1) verbindet, wobei letztere in der Leitung (2) montiert ist, wobei eine mittlere Schwenkachse (6) für die Klappe (1) definiert wird,
Verschlussklappe, wobei die Klappe (1) in der Leitung (2) montiert ist, mit der Möglichkeit, diese in einer Führung zu verschieben, sowie der Möglichkeit, sie um die Achse (6) zwischen einer mittleren Position in dem Durchlass (2') der Leitung (2) und einer seitlich versetzten Position zu schwenken,
Verschlussklappe, bei der gleichzeitige Dreh- und Translationsbewegungen mittels eines Rückführmechanismus (9) einander untergeordnet und voneinander abhängig gemacht werden, und die Klappe (1) in ihrer maximalen freigegebenen Position im Wesentlichen flach an eine der Wände (8, 8') der Leitung (2) anliegt, und **dadurch gekennzeichnet, dass** die Schwenkachse (6) mit zwei gegenüberliegenden Wänden (8') der Leitung (2) auf eine Weise verbunden ist, dass eine Halterung mit einer translatorischen Führung und der Möglichkeit der Drehung der Klappe (1) in Bezug auf die Leitung (2) gewährleistet wird, wobei das Bedienelement (4) konfiguriert ist, um der Klappe (1) durch den Übertragungsmechanismus (5) eine Drehbewegung zu verleihen, wobei die Drehbewegung ebenso gleichzeitig mittels des Rückführmechanismus (9) in eine Translationsbewegung umgewandelt wird, zusammenwirkend mit der Halterung mit translatorischer Führung der Achse (6).

2. Verschlussklappenvorrichtung nach Anspruch 1, **dadurch gekennzeichnet, dass** der Rückführmechanismus (9) mindestens eine eingreifende Verbindung zwischen einem Zahnelement (10), das mit der Klappe (1) oder dessen Schwenkachse (6) fest verbunden ist, und einem Zahnelement (11), das mit der Leitung (2) fest verbunden ist, umfasst.

3. Verschlussklappenvorrichtung nach einem der Ansprüche 1 und 2, **dadurch gekennzeichnet, dass** die Schwenkachse (6) der Klappe (5), die ebenso deren Halterung bereitstellt, einerseits mit der Leitung (2) durch eine Gleitverbindung (7) verbunden ist, die geeignet und dazu bestimmt ist, eine translatorische Führung dieser Achse (6) zwischen einer mittleren Position im Durchlass (2') der Leitung (2) und einer seitlich versetzten Position gegen eine Wand (8, 8') der Leitung (2) umzusetzen und andererseits durch mindestens eine eingreifende Verbindung (9), beispielsweise vom Typ mit einem Ritzel (10) und einer Zahnstange (11), die geeignet ist und dazu bestimmt ist, eine Drehung dieser Achse (6) mit einer gleichzeitigen translatorischen Verschiebung umzusetzen, wobei diese beiden Verbindungen (7 und 9) konfiguriert und zueinander angeordnet sind, um funktionell auf eine Weise zusammenzuwirken, dass die Klappe (1) durch die Wirkung des Übertragungsmechanismus (5) bei Betätigung des Bedienelements (4) auf gleichzeitige und voneinander abhängige Weise in eine kombinierte Bewegung, nämlich ein kontrolliertes Schwenken um ihre Achse (6) und eine kontrollierte translatorische Bewegung letzterer zwischen den verschlossenen und freigegebenen Endpositionen des Durchlasses (2') der Leitung (2), versetzt wird.

4. Verschlussklappenvorrichtung nach einem der Ansprüche 1 bis 3, **dadurch gekennzeichnet, dass** die Schwenkachse (6) der Klappe (1) lateral so montiert ist, dass sie in den geradlinigen parallelen Nuten oder Schlitzen (12) gleiten kann, die in den gegenüberliegenden Wänden (8') der Leitung (2) angeordnet sind, die sich im Wesentlichen in der Mitte der Wände (8') bis zu ihren oberen oder unteren Kanten erstrecken, und die die Gleitverbindung (7) definieren, und dadurch, dass mindestens ein Mechanismus (9), der die eingreifende Verbindung umsetzt, mit der Klappe (1) oder der Achse (6) verbunden ist, wobei der Mechanismus (9) ein Ritzel oder einen Teil des Zahnrads (10) umfasst, das mit der Klappe (1) oder der Achse (6) fest verbunden ist, und eine Zahnstange (11), die mit der Leitung (2) fest verbunden ist oder auf dieser gebildet ist, wobei die Gleitverbindung (7) zwischen der Achse (6) und den Nuten (12) und die oder jede eingreifende Verbindung (9) zwischen der Zahnstange (11) und dem Teil des Zahnrads(10) so konfiguriert und jeweils angeordnet sind, dass sie miteinander funktionell so zusammenzuwirken, dass die Klappe (1) durch eine komplexe Bewegung verschoben wird, die eine Drehung um ihre Achse (6) und die gleichzeitige und proportionale translatorische Verschiebung der Achse (6) kombiniert, und zwar schrittweise zwischen einer den Durchgang verschließenden Position des Durchlasses, in der die Klappe (1) in einer Ebene positioniert ist, die im Wesentlichen senkrecht zu der Längsachse (AL) der Leitung (2) liegt, und in der die Achse (6) in der mittleren Position ist, und einer maximal freigegebenen Position des Durchlasses (2'), in der die Klappe (1) gegen die obere oder untere Wand (8) der Leitung (2) gedrückt wird, wobei sie vorteilhafterweise parallel zu dieser Wand (8) positioniert wird, bevorzugt im Wesentlichen flach gegen letztere anliegend.

5. Verschlussklappenvorrichtung nach Anspruch 4, **dadurch gekennzeichnet, dass** die Ausrichtung der Gleitschienen (12) und der Zahnstange(n) (11) zueinander parallel oder im Wesentlichen parallel liegen, derart, dass das Ritzel oder der Teil des Zahnrads (10) der oder jeder eingreifenden Verbindung (9) aus einem gezahnten Winkelbereich von etwa 90° besteht, der auf der Klappe (1) oder der Achse (6) gebildet ist, und dass die Verschiebung der Klappe (1) in der Richtung der oberen Wand (8) der Leitung (2) erfolgt, wobei die Nute oder Schlitze (12) der Gleitverbindungen (7) und die Zahnstange(n) (11) in eine Strömungsrichtung (D) des Gasstroms, der in der Leitung (2) zirkuliert, von den unteren Endpunkten zu den oberen Endpunkten geneigt sind.

6. Verschlussklappenvorrichtung nach einem der Ansprüche 1 bis 5, **dadurch gekennzeichnet, dass** die Leitung (2) innen Absätze oder Bünde (13) im Bereich der Wände (8, 8') aufweist, die die Auflageflächen für die Klappe (1) in der verschlossenen Position bilden, wobei letztere vorteilhafterweise mit einer umlaufenden Dichtung (14) versehen ist, die gegen diese Flächen aufliegt.

7. Verschlussklappenvorrichtung nach einem der Ansprüche 1 bis 6, **dadurch gekennzeichnet, dass** der Mechanismus (5) zum Übertragen und Umwandeln der Bewegung einen ersten Arm (15) aufweist, der starr mit dem Bedienelement (4) verbunden ist, in Form eines Drehreglers, der in Bezug auf die Leitung (2) schwenkbar montiert ist, und einen zweiten Arm (15'), der starr mit der Klappe (1) oder der Schwenkachse und der Halterung (6) der Klappe (1) verbunden ist, wobei die zwei Arme (15 und 15') untereinander durch eine Gelenkverbindung (16) verbunden sind, die eine Übertragung der Bewegung zwischen dem ersten Arm (15) und dem zweiten Arm (15') zulässt, wobei diese Bewegung durch die Gleitverbindung (7) und die eingreifende Verbindung (9), die die Klappe (1) oder deren Achse (6) mit der Leitung (2) verbindet, in eine komplexe Verschiebung umgewandelt wird, die eine Drehung und eine Translation der Klappe (1) und deren Achse (6) kombiniert.

8. Verschlussklappenvorrichtung nach Anspruch 7, **dadurch gekennzeichnet, dass** die Gelenkverbindung (16) zwischen dem ersten und zweiten Arm (15 und 15') aus einem Stift oder einem Finger (16') besteht, der in einer Nut oder einer Rille (16") verfährt, und einen Stift (16') umfasst, der im Bereich des freien Endes des ersten Arms (15) gebildet wird, und eine teilkreisförmige Nut (16"), die in dem freien Ende des zweiten Arms (15') angeordnet ist.

9. Verschlussklappenvorrichtung nach einem der Ansprüche 1 bis 8, **dadurch gekennzeichnet, dass** der Mechanismus (5) zur Übertragung von Bewegung und möglicherweise ein Teil zumindest des Bedienelements (4) im Inneren der Ausgangsöffnung (2") der Leitung (2) angeordnet sind, wobei der Mechanismus (5) zum Übertragen von Bewegung sich in diese Leitung (2) erstreckt und mit der Klappe (1) kinematisch verbunden ist, bevorzugt in dem Bereich letzterer, der sich auf der Schwenkachse und der Halterung (6) befindet.

10. Verschlussklappenvorrichtung nach einem der Ansprüche 1 bis 8, **dadurch gekennzeichnet, dass** das Bedienelement (4) und der Mechanismus (5) zum Übertragen von Bewegung auf einer lateralen äußeren Seite der Leitung (2) angeordnet sind, wobei der Mechanismus (5) mit einem Teil der Schwenkachse und der Halterung (6) der Klappe (1) verbunden ist, der quer in einer Gleitschiene (12) montiert ist, die in einer lateralen Wand (8') angrenzend an die Leitung (2) angeordnet ist.

11. Verschlussklappenvorrichtung nach den vorstehenden Ansprüchen 7 und 10, **dadurch gekennzeichnet, dass** der zweite Arm (15') des Mechanismus (5) zum Übertragen von Bewegung einen Flansch (17) umfasst, der konfiguriert ist, um die quer verlaufende Gleitschiene (12) zu verschließen, die in der Wand (8') der Leitung (2) angeordnet ist, unabhängig von der Position der Klappe (1).

12. Lüfter für ein Kraftfahrzeug, umfassend im Wesentlichen eine Leitung (2), eine Verschlussklappe (1), die in der Leitung (2) montiert ist und mittels eines Bedienelements (4) gesteuert werden kann, und eine Vielzahl von Flügeln (18) zur Diffusion und Ausrichtung des Luftstroms, der aus dem Lüfter (3) austritt, die im Bereich der Ausgangsöffnung (2") der Leitung (2) des letzteren montiert sind,
wobei der Lüfter (3) **dadurch gekennzeichnet ist, dass** die Klappe (1) und das Bedienelement (4) Bestandteil einer Vorrichtung nach einem der Ansprüche 1 bis 11 sind, wobei die Klappe (1) und der Abschnitt des Durchlasses (2') der Leitung (2), der letztere aufnimmt, eine im Allgemeinen und im Wesentlichen quadratische oder rechteckige Form aufweisen.

13. Kraftfahrzeug, **dadurch gekennzeichnet dass** es mindestens einen Lüfter (3) nach Anspruch 12 aufweist.

## Claims

1. Shutter device for closing a gaseous fluid circulation duct, in particular a shutter for a ventilation duct,
this shutter device comprising on one hand, a shutter (1) which is fitted in the duct (2), and movable between a position closing the flow path (2') of the duct (2) and a maximum release position of the said flow path (2'), preferably in a substantially square or rectangular form; and on the other hand at least one operating device (4) controllable by a user and, finally, a movement transmission mechanism (5), possibly with transformation, linking the said device (4) kinematically to the said shutter (1), the latter being fitted in the duct (2) with a central pivot axis (6) for the said shutter (1),
shutter device in which the shutter (1) is fitted in the duct (2) and able to be guided in translational movements, in addition to its ability to pivot around the axis (6), this between a central position in the flow path (2') of the duct (2) and a position offset to the side,
shutter device (2) in which the simultaneous rotational and translational movements are subject to one another or made interdependent on one another through a servomechanism (9), and the shutter (1) is, in its maximum release position, held substantially against one of the walls (8, 8') of the said duct (2), and **characterised in that** the pivot axis (6) is linked to two opposite walls (8') of the duct (2) in a way which ensures the shutter (1) can be fitted with translational guidance and the ability to rotate with respect to the said duct (2), the operating device (4) being configured to impart a rotational movement of the shutter (1) through the transmission mechanism (5), this rotational movement also being simultaneously converted into a translational movement by means of the servomechanism (9), in cooperation with fitting and guiding the axis (6) in translation.

2. Shutter device according to claim 1, **characterised in that** the servomechanism (9) has at least one mesh link between a toothed part (10) integral with the shutter (1) or its pivot axis (6) and a toothed part (11) integral with the duct (2).

3. Shutter device according to claim 1 and 2, **characterised in that** the pivot axis (6) of the shutter (5), which also ensures its fixing, is linked to the duct (2), on one hand, by a suitable slide link (7) designed to provide translational guidance of the said axis (6) between a central position in the flow path (2') of the duct (2) and a position offset to the side towards a wall (8, 8') of the said duct (2) and, on the other hand, by at least one mesh link (9), for example of the rack (11) and pinion (10) type, adapted and designed to enable a rotation of the said axis (6) with the simultaneous translational movement of the latter, these two links (7 and 9) being mutually configured and arranged to cooperate operationally between themselves in order to impose on the said shutter (1), under the action of the transmission mechanism (5) when the operating device (4) is actioned, a displacement movement combining, in a simultaneous and interdependent manner, a controlled pivot around its axis (6) and a controlled translational movement of this latter, this between the extreme closed and open positions of the flow path (2') of the duct (2).

4. Shutter device according to any one of claims 1 to 3, **characterised in that** the pivot axis (6) of the shutter (1) is fixed laterally with the ability to slide in straight parallel grooves or slots (12), which are housed in the opposing walls (8') of the duct (2), which extend substantially from the middle of the said walls (8') to their upper or lower edges and which define the sliding link (7), and **in that** at least one mechanism (9) forming the mesh link is associated with the said shutter (1) or the said axis (6), this mechanism (9) comprising a pinion or a part of a toothed wheel (10) which is integral with the shutter (1) or the axis (6) and a toothed rack (11) which is integral with the duct (2) or is formed on this latter part, the sliding link (7) between the axis (6) and the grooves (12) and the or each mesh link (9) between the toothed rack (11) and the part of the toothed wheel (10) being configured and arranged relative to one another to cooperate operationally between themselves in order to move the shutter (1) according to a complex movement combining pivoting around its axis (6) and simultaneous and proportional translational movement of the said axis (6), this progressively between a closed position of the flow path, in which the shutter (1) is positioned according to a plane substantially perpendicular to the longitudinal axis (AL) of the duct (2) and with its axis (6) in central position, and a position of maximum opening of the said flow path (2'), in which the shutter (1) is moved against the upper or lower wall (8) of the said duct (2) whilst being advantageously positioned parallel to this wall (8), preferably held substantially against this latter.

5. Shutter device according to claim 4, **characterised in that** the orientations of the slides (12) and the or each toothed racks (11) are parallel or substantially parallel relative to one another, **in that** the pinion or the part of the toothed wheel (10) of the or each mesh link (9) consists of a toothed angular sector of around 90° formed on the shutter (1) or on the axis (6), and in which the release of the shutter (1) happens in the direction of the upper wall (8) of the duct (2), the grooves or slots (12) of the slide links (7) and the or each toothed rack (11) being inclined in the direction of flow (D) of the gaseous flow circulating in the duct (2), from their lower ends towards their upper ends.

6. Shutter device according to any one of claims 1 to 5, **characterised in that** the duct (2) has internal flanges or projections (13) on its walls (8, 8'), which form support surfaces for the shutter (1) in a closed position, this latter being advantageously provided with a peripheral joint (14) supporting these surfaces.

7. Shutter device according to any one of claims 1 to 6, **characterised in that** the mechanism (5) for the transmission and transformation of movement comprises a first arm (15) rigidly integral with the operating device (4) in the form of a rotating button, fitted to pivot in relation to the duct (2), and a second arm (15') rigidly integral with the shutter (1) or the pivot and fixing axis (6) of the said shutter (1), these two arms (15 and 15') being linked together by a hinged link (16) controlling a movement transmission between the first arm (15) and the second arm (15'), the said movement being transformed by the slide links (7) and mesh links (9) linking the shutter (1) or its axis (6) to the duct (2) in a complex movement combining rotation and translation of the said shutter (1) and its axis (6).

8. Shutter device according to claim 7, **characterised in that** the hinged link (16) between the first and second arms (15 and 15') is constituted by a pin or pawl (16') circulating in a groove or a recess (16") and comprises a pin (16') formed on the level of the free end of the first arm (15) and a partly circular groove (16") housed in the free end of the second arm (15').

9. Shutter device according to any of claims 1 to 8, **characterised in that** the movement transmission mechanism (5) and perhaps at least one part of the operating device (4) are placed in the interior of the outlet (2") of the duct (2), the movement transmission mechanism (5) extending into the said duct (2) and being linked kinematically to the shutter (1), preferably to the part of the latter situated above its pivot and fixing axis (6).

10. Shutter device according any one of claims 1 to 8, **characterised in that** the operating device (4) and the movement transmission mechanism (5) are arranged on one lateral exterior side of the duct (2), the said mechanism (5) being linked to a part of the pivot and fixing axis (6) of the shutter (1) which is fixed transversely in a slide (12) housed in a lateral wall (8') adjoining the duct (2).

11. Shutter device according to claims 7 and 10, **characterised in that** the second arm (15') of the transmission movement mechanism (5) has a flange (17) configured to close the transverse slide (12) housed in the wall (8') of the duct (2), whatever the position of the shutter (1).

12. Air vent for a motor vehicle, comprising essentially a duct (2), a shutter (1) fitted in the duct (2) and controllable by means of an operating device (4) and a number of fins (18) for diffusing and directing the air flow from the air vent (3), fitted at the level of the outlet (2") of the duct (2) of the latter,
air vent (3) **characterised in that** the shutter (1) and the operating device (4) form part of a device according to any of claims 1 to 11, the shutter (1) and the section of the flow path (2') of the duct (2) receiving this latter having a general form which is substantially square or rectangular.

13. Motor vehicle **characterised in that** it comprises at least one air vent (3) according to claim 12.
